# EUROPÄISCHE PATENTSCHRIFT

(11) **EP 2 381 227 B1**
(45) Veröffentlichungstag und Bekanntmachung des Hinweises auf die Patenterteilung: **13.09.2017**
(21) Anmeldenummer: 11003317.2
(22) Anmeldetag: 20.04.2011
(51) Int. Cl.: G01F 1/84

(54) **Coriolis-Massedurchflussmessgerät**
Coriolis mass flow measuring device
Débitmètre massique Coriolis

(30) Priorität: 23.04.2010 DE 102010018222
(43) Veröffentlichungstag der Anmeldung: 26.10.2011
(73) Patentinhaber: Krohne AG, 4019 Basel (CH)
(72) Erfinder: Hussain, Yousif, Northampton NN3 3DA (GB); Rolph, Christopher, Hartwell Northants NN7 2HA (GB); Wang, Tao, Canterbury T2 8HP (GB)
(74) Vertreter: Gesthuysen Patent- und Rechtsanwälte

(56) Entgegenhaltungen:
- EP-A1- 1 431 719
- WO-A1-03/021203
- DE-A1- 3 824 351
- DE-A1- 4 200 060
- US-A- 3 583 209
- US-A- 4 738 143
- US-A1- 2010 005 906

## Beschreibung

Die Erfindung betrifft ein Coriolis-Massedurchflussmessgerät mit wenigstens einer Sensoranordnung und wenigstens einem Gehäuse, wobei die Sensoranordnung wenigstens ein Messrohr, wenigstens einen Schwingungserzeuger und wenigstens einen Schwingungsaufnehmer umfasst, und wobei das Messrohr durch den Schwingungserzeuger in wenigstens einer Arbeitsfrequenz anregbar ist, wobei innerhalb des Gehäuses zusätzlich wenigstens ein Versteifungselement angeordnet ist und das Versteifungselement derart mit dem Gehäuse verbunden ist, dass die realisierten Eigenfrequenzen des Gehäuses weg von der Arbeitsfrequenz des Messrohrs verschoben sind.

Coriolis-Massedurchflussmessgeräte der vorgenannten Art sind beispielsweise aus der DE 10 2008 007 742 A1 bekannt. Bei Coriolis-Massedurchflussmessgeräten wird ganz allgemein das von einem Medium durchströmbare Messrohr durch den Schwingungserzeuger zu einer Schwingung angeregt, vorzugsweise in einer bestimmten Eigenform in Resonanzfrequenz - Arbeitsfrequenz, wobei die Arbeitsfrequenz auf das Messrohr samt dem in dem Messrohr strömenden Medium abgestimmt ist. Ein- und auslaufseitig wirken sich Trägheitskräfte unterschiedlich auf das strömende Medium in dem zu Schwingungen angeregten Messrohr und damit auf das Messrohr aus, so dass die Auslenkung des Messrohrs ein- und auslaufseitig unterschiedlich beeinflusst wird und so die ein- und auslaufseitig mit Schwingungsaufnehmern erfassten Schwingungen des Messrohrs eine Phasenverschiebung aufweisen, die ein unmittelbares Maß für den interessierenden Massedurchfluss ist. Aus der Phasenverschiebung wird durch eine Auswerteelektronik die zu erfassende, abgeleitete Messgröße - der Massedurchfluss - bestimmt.

Die EP 1 431 719 A1 offenbart ein Coriolis-Massedurchflussmessgerät mit einem einzigen geraden Messrohr. Das Gehäuse weist Verbindungsschienen auf, die das Gehäuse stabilisieren und das Messrohr umgeben. An dem Messrohr sind Auslegermassen vorgesehen, um eine optimierte Balacierung des Gerätes zu erreichen.

Die DE 42 00 060 A1 offenbart ein Massendurchflussmessgerät mit einer Coriolis-Leitung, die innerhalb eines Kompensationszylinders angeordnet ist. Zusätzlich ist zwischen der Coriolis-Leitung und dem Kompensationszylinder eine Versteifungsfeder angeordnet, die die Steifigkeit der Coriolis-Leitung für den Anregungsmode erhöht.

Die DE 38 24 351 A1 offenbart einen Masse-Durchflussmesser mit einem Schwingungsrohr und einem teilweise schwingungssteif ausgebildeten Gehäuse, wobei die Anschlussrohre des Schwingungsrohrs starr mit dem Gehäuse verbunden sind. Das Gehäuse ist besonders dickwandig ausgebildet, woraus die Schwingungssteifigkeit resultiert.

Die US 2010/0005906 A1 offenbart ein Coriolis-Massedurchflussmessgerät mit einem Gehäuse, dass einen Rahmen mit einem verstärkten Bereich aufweist, der innerhalb des Gehäuses angeordnet ist und für eine gesteigerte Steifigkeit sorgt. Der Rahmen ist derart angeordnet, dass der die Messrohre umgibt.

Die WO 03/021203 A1 offenbart ein Coriolis-Massedurchflussmessgerät mit einem Gehäuse, wobei das Gehäuse eine Mehrzahl von Verstärkungssegmenten aufweist, um das Gehäuse zu versteifen und damit dessen Schwingungseigenschaften zu beeinflussen.

Die US 3,583,209 offenbart ein Coriolis-Massedurchflussmessgerät mit einem Messrohr, wobei das Coriolis-Massedurchflussmessgerät von einem Gehäuse umgeben ist. Innerhalb des Gehäuses ist eine schlangenförmig gebogene, dampfführende Leitung angeordnet, die das Messrohr umgibt. Mit der dampfführenden Leitung ist das Messrohr aufheizbar.

Die US 4,738,143 offenbart ein Coriolis-Massedurchflussmessgerät, das sich insbesondere für Hochtemperaturanwendungen eignet. Das Coriolis-Massedurchflussmessgerät ist von einem Gehäuse umgeben, wobei innerhalb des Gehäuses parallel zu den Messrohren ein Beheizungsrohr angeodnet ist, mit dem das Coriolis-Massedurchflussmessgerät und die Messrohre temperierbar sind.

Je nach zu erfassendem Massedurchfluss sind Coriolis-Massedurchflussmessgeräte mit unterschiedlichen Querschnitten der Messrohre verfügbar, wobei die Größe des Messgeräts insgesamt mit steigendem Rohrquerschnitt zunimmt. Um insbesondere bei großen Gehäusen eine ausreichende Stabilität des Gehäuses zu gewährleisten, damit eventuelle Schwingungen des Gehäuses während des Betriebs keine negativen Auswirkungen auf die Qualität der Messwerte haben, sind die Gehäuse solcher Coriolis-Massedurchflussmessgeräte entsprechend dickwandig ausgestaltet. Diese dickwandige Bauweise wirkt sich zwar positiv auf die Stabilität aus, bewirkt allerdings, dass die Messgeräte sehr schwer werden und der Herstellungsaufwand steigt.

Es ist daher Aufgabe der vorliegenden Erfindung, ein Coriolis-Massedurchflussmessgerät der vorbeschriebenen Art anzugeben, das auf einfache Weise herzustellen ist und dessen Gewicht im Bezug auf die Größe des Messgeräts optimiert ist.

Die vorgenannte Aufgabe ist bei einem gattungsgemäßen Coriolis-Massedurchflussmessgerät dadurch gelöst, dass das Versteifungselement aus wenigstens einem Hohlkörper besteht, so dass innerhalb des Versteifungselements ein geschlossenes Volumen definiert wird und innerhalb des Versteifungselements ein Medium zum Einstellen der Temperatur des Coriolis-Massedurchflussmessgeräts (1) und/oder der Temperatur des Messmediums innerhalb der Messrohre (4) führbar ist. Das Versteifungselement ist mit dem Messrohr innerhalb des Gehäuses des Coriolis-Massedurchflussmessgeräts angeordnet und steht vorzugsweise in einer Mehrzahl von Kontaktbereichen oder Kontaktstellen mit dem Gehäuse in Verbindung. Mit dem Versteifungselement werden vorzugsweise gegenüberliegende Wände des Gehäuses miteinander verbunden, so dass die Wände insgesamt durch eine innere mechanische Kopplung durch das Versteifungselement stabilisiert werden und das Gehäuse insgesamt versteift wird. Durch die Verbindung des Gehäuses mit dem Versteifungselement werden die frei schwingenden Strecken des Gehäuses verkürzt, wodurch die realisierten Eigenfrequenzen des Gehäuses üblicherweise angehoben werden, insbesondere so, dass die Eigenfrequenzen des Gehäuses weg von der Arbeitsfrequenz, also weg von dem Arbeitsfrequenzbereich des Messrohrs verschoben sind.

Dass das Versteifungselement mit dem Gehäuse verbunden ist, bedeutet nicht zwingend, dass faktisch eine mechanische Verbindung zwischen dem Versteifungselement und dem Gehäuse hergestellt ist, sondern kann auch bedeuten, dass das Versteifungselement mit dem Gehäuse, beispielsweise durch eine Kontaktkraft, berührend in Verbindung steht und das Versteifungselement so mit dem Gehäuse wechselwirkt, dass die erfindungsgemäße Wirkung, nämlich die Verschiebung der realisierten Eigenfrequenzen des Gehäuses weg von der Arbeitsfrequenz des Messrohrs, erzielt wird. Mit der Arbeitsfrequenz des Messrohrs ist die Erregerfrequenz gemeint, die zur Schwingungsanregung des Messrohrs durch den Schwingungserzeuger eingesetzt wird, wobei diese Erregerfrequenz vorzugsweise auf das Messrohr mit dem darin vorhandenem Medium abgestimmt ist.

Ein erfindungsgemäß ausgestaltetes Coriolis-Massedurchflussmessgerät lässt sich unabhängig von der Anzahl der tatsächlich im Coriolis-Massedurchflussmessgerät vorhandenen Messrohre realisieren, so dass die folgenden Ausführungen zu einer bestimmten Anzahl an Messrohren stets nur beispielhaft zu verstehen ist und sich ein erfindungsgemäßes Messgerät oder ein Messgerät nach einer der nachfolgend beschriebenen Ausgestaltungen stets mit einem einzigen, aber auch mit zwei, drei, vier oder mehr Messrohren realisieren lässt.

Die Wechselwirkung zwischen dem Versteifungselement und dem Gehäuse führt dazu, dass die während des Betriebs des Coriolis-Massedurchflussmessgeräts entstehenden Schwingungen des Gehäuses durch das Versteifungselement minimiert werden, da die Eigenfrequenz des Gehäuses ausreichend weit von der Arbeitsfrequenz des Messrohrs - mit darin enthaltenem Messmedium - entfernt ist. Die "Eigenfrequenzen des Gehäuses" beschreiben dabei die Eigenfrequenzen sämtlicher Bauteile, die unmittelbar zusammenhängen und dem Gehäuse zuzurechnen sind. Je nach Ausgestaltung des Coriolis-Massedurchflussmessgeräts kann also mit "Gehäuse" einmal lediglich die tatsächliche Schutzhülle gemeint sein, allerdings auch beispielsweise die Schutzhülle mit Anbauteilen, die entsprechend bei einer - ungewollten - Schwingungsanregung des Gehäuses "mitschwingen".

Durch das zusätzliche Versteifungselement wird das Gehäuse derart stabilisiert, dass die Wandstärke des Gehäuses insgesamt reduziert werden kann, was insbesondere bei großen Coriolis-Massedurchflussmessgeräten mit großen Messrohrquerschnitten zu einer wesentlichen Reduzierung des Gewichts des Coriolis-Massedurchflussmessgeräts führt. Das Versteifungselement kann beispielsweise als eine zusammenhängende Struktur ausgestaltet sein oder alternativ aus einer Mehrzahl von einzelnen Versteifungselementen bestehen, die bezüglich ihrer stabilisierenden Wirkung gleichgerichtet innerhalb des Gehäuses des Coriolis-Massedurchflussmessgeräts angeordnet sind und zusammenwirken. Das Versteifungselement steht dabei in keinem unmittelbaren Kontakt mit dem Messrohr.

Es ist vorgesehen, dass das Versteifungselement aus wenigstens einem Hohlkörper besteht, so dass innerhalb des Versteifungselements ein geschlossenes Volumen definiert wird und innerhalb des Versteifungselements ein Medium führbar ist. Das Versteifungselement bildet folglich innerhalb des Gehäuses ein von dem Volumen des Gehäuses abgeschlossenes inneres Volumen, so dass innerhalb des Versteifungselements ein Medium führbar ist und das Medium nicht ungewollt aus dem Versteifungselement - in das Gehäuse - heraustreten kann.

Dieses Coriolis-Massedurchflussmessgerät eignet sich insbesondere für Anwendungen, bei denen beispielsweise die Messrohre oder das Gehäuse temperiert werden müssen, also entweder das Gehäuse an sich oder das Messmedium innerhalb des Messrohrs auf eine bestimmte Temperatur eingestellt bzw. gehalten werden muss. Dabei sind sowohl Anwendungen denkbar, bei denen geheizt werden muss, als auch kryogene Anwendungen, bei denen gekühlt werden muss. Durch das Versteifungselement ist dann beispielsweise ein Heizmedium, z.B. heißes Wasser oder Dampf, durchleitbar, so dass die Wärmeenergie von dem Heizmedium auf das Coriolis-Massedurchflussmessgerät - auf das Gehäuse und/oder die Messrohre - übertragen wird. Das Heizen des Coriolis-Massedurchflussmessgeräts ist insbesondere dann notwendig, wenn innerhalb der Messrohrleitung ein heißes Medium geführt wird, das auf einer bestimmten Temperatur gehalten werden muss, damit es nicht verfestigt - Teer, Wachs etc. - und/oder temperaturinduzierte Spannungen innerhalb des Coriolis-Massedurchflussmessgeräts vermieden werden müssen.

Dieses Coriolis-Massedurchflussmessgerät hat folglich den Vorteil, dass sie eine Heizeinrichtung für das Coriolis-Massedurchflussmessgerät mit einem Versteifungselement für das Gehäuse kombiniert, wodurch sich eine zusätzliche Gewichts- und Raumeinsparung ergibt. Für eine Heizeinrichtung ist nunmehr kein Raum außerhalb des Messgeräts notwendig, da die Heizeinrichtung vorteilhaft in das Innere des Gehäuses des Messgeräts integriert ist.

Gemäß einer ersten vorteilhaften Ausgestaltung eines erfindungsgemäßen Coriolis-Massedurchflussmessgeräts ist vorgesehen, dass das Messrohr gebogen ist, insbesondere im wesentlichen U- oder V-förmig gebogen ist. Vorzugsweise sind bei einem gattungsgemäßen Coriolis-Massedurchflussmessgerät zwei - parallel verlaufende - gebogene Messrohre vorgesehen, die im Betrieb gegenläufig zueinander schwingen, so dass zwischen den Messrohren mit dem Schwingungsaufnehmer wenigstens eine Schwingung abgegriffen werden kann. Durch die gebogene Form des Messrohrs wird notwendigerweise das Gehäuse des Coriolis-Massedurchflussmessgeräts größer, so dass sich das Versteifungselement bei einer solchen Ausgestaltung ganz besonders vorteilhaft auswirkt, nämlich zu einer nennenswerten Stabilisierung des großvolumigen Gehäuses des Coriolis-Massedurchflussmessgeräts führt, indem die Eigenfrequenz des Gehäuses weg von der Arbeitsfrequenz des oder der Messrohre verschoben ist. Durch den größeren Messeffekt, der mit gebogenen Messrohren in Gegensatz zu geraden Messrohren erzielt wird, wird jedoch gleichzeitig eine gesteigerte Stabilität des Gehäuses mit durch das Versteifungselement aus dem Arbeitsfrequenzbereich verschobenen Eigenfrequenzen besonders vorteilhaft, damit sich eine ansonsten vorliegende Schwingung des Gehäuses nicht negativ auf die Ergebnisse der Massedurchflussmessung oder in sonstiger Weise störend auswirkt.

Zur Realisierung einer besonders bevorzugten Verschiebung der realisierten Eigenfrequenzen des Gehäuses weg von der Arbeitsfrequenz des Messrohrs ist vorgesehen, dass das Versteifungselement eine bogenförmige Grundform aufweist, wobei das Versteifungselement insbesondere derart im Gehäuse angeordnet ist, dass der Bogenverlauf des Versteifungselements entgegengesetzt zum Bogenverlauf des Messrohrs ausgerichtet ist. Zwischen Messrohreintritt und Messrohraustritt hat das Messrohr einen im wesentlichen U- oder V-förmigen gebogenen Verlauf. Auch das Versteifungselement weist eine im Wesentlichen bogenförmige Grundform auf, wobei "bogenförmige Grundform" nicht ausschließlich bedeutet, dass das Versteifungselement einem stetigen Bogen folgt, sondern auch bedeuten kann, dass das Versteifungselement beispielsweise aus einer Mehrzahl von geraden Einzelteilen zusammengesetzt ist, so dass eine stetige Bogenform lediglich angenähert realisiert ist. Im Montagezustand ist das Versteifungselement also vorzugsweise derart im Gehäuse angeordnet, dass sich der Bogenverlauf des Messrohrs entgegengesetzt zum Bogenverlauf des Versteifungselements erstreckt, folglich die Bogenverläufe entgegengesetzt zueinander angeordnet im Gehäuse angeordnet sind, woraus eine überdurchschnittliche Steigerung der Stabilität des Gehäuses erzielt wird.

Das Versteifungselement ist vorzugsweise derart ausgebildet, dass es sich an mindestens zwei Längsseiten des Gehäuses entlang des Messrohrs erstreckt. Ganz bevorzugt bildet das Versteifungselement dabei in einer Ebene, die von dem Messrohr durchtreten wird eine geschlossene Kontur aus, so dass das Versteifungselement im Montagezustand den Bogenverlauf des Messrohrs vollständig umschließt und dabei an allen vier Seitenbereichen - Längs- und Stirnseiten - mit dem Gehäuse des Coriolis-Massedurchflussmessgeräts rundherum verbunden ist, wobei durch das Versteifungselement dabei insbesondere nicht nur die gegenüberliegenden Wände des Gehäuses miteinander verbunden werden, sondern alle Wände über das Versteifungselement miteinander in Verbindung stehen. Die Bogenform des Versteifungselements ist anhand mathematischer Berechnungen optimiert und derart ausgeformt, dass die Eigenfrequenzen des Gehäuses in vorteilhafter Weise weg von der Arbeitsfrequenz des Messrohrs verschoben sind.

Eine Verbindung zwischen Versteifungselement und dem Gehäuse, die eine mechanische Wechselwirkung zwischen Gehäuse und Versteifungselement erlaubt, wird vorteilhaft realisiert, indem das Versteifungselement an mindestens einer Wand des Gehäuses befestigt ist, insbesondere flächig anliegend befestigt ist, bevorzugt stoffschlüssig mit der Wand verbunden ist. Durch das Befestigen des Versteifungselements an mindestens einer Wand des Gehäuses werden die frei schwingenden Strecken innerhalb des Gehäuses verkürzt. Vorzugsweise ist das Versteifungselement jedoch mit allen das Versteifungselement umgebenden Wänden des Gehäuses verbunden, so dass eine gleichmäßige mechanische Wechselwirkung zwischen dem Gehäuse und dem Versteifungselement realisiert ist. Eine vorteilhafte Befestigung des Versteifungselements am Gehäuse kann dabei vorteilhaft unabhängig von der Befestigungsart kraft-, form- oder stoffschlüssig erfolgen. Als besonders vorteilhaft haben sich das Verschrauben, das Verschweißen und das Verlöten herausgestellt.

Eine stoffschlüssige Verbindung zwischen dem Gehäuse und dem Versteifungselement kann dabei vorteilhaft realisiert werden, indem das Gehäuse an den ausgewählten Fixierungsstellen Öffnungen - Löcher oder Schlitze - aufweist, so dass das die Wände des Gehäuses von außerhalb mit dem innenliegend positionierten Versteifungselement durch die Öffnungen verschweißt werden können, wobei die Öffnungen im Gehäuse während des Schweißvorgangs mit Schweißzusatzmaterial verschlossen werden.

Um eine Zugänglichkeit des Volumens des Versteifungselements zu gewährleisten, ist gemäß einer Weiterbildung ferner vorgesehen, dass das Volumen des Versteifungselements wenigstens eine Eingangsöffnung und wenigstens eine Ausgangsöffnung aufweist, so dass ein Medium in das Volumen einleitbar bzw. aus dem Volumen ausleitbar ist. Die Eingangsöffnung und die Ausgangsöffnung des Volumens des Versteifungselements sind vorzugsweise von außerhalb des Gehäuses des Coriolis-Massedurchflussmessgeräts zugänglich, indem die Eingangsöffnung und die Ausgangsöffnung beispielsweise als Stutzen das Gehäuse des Massedurchflussmessgeräts durchtreten und an zugänglichen Stellen positioniert sind.

Durch die Eingangsöffnung wird ein Medium, z.B. ein Heiz- oder Kühlmedium, in das Volumen des Versteifungselements eingeleitet, wobei das Medium auf seinem Weg durch das Volumen des Versteifungselements innerhalb des Gehäuses beispielsweise seine Wärmeenergie an das Gehäuse oder das Messrohr abgibt und anschließend im abgekühlten Zustand aus der Austrittsöffnung wieder aus dem Volumen heraustritt. Für einen optimalen Wärmeübergang zwischen Gehäuse und Versteifungselement ist es dazu vorteilhaft, wenn das Versteifungselement möglichst großflächig an den Wänden des Gehäuses anliegt, so dass eine optimale Wärmeübertragung zwischen Versteifungselement und Gehäuse des Coriolis-Massedurchflussmessgeräts erfolgen kann. Auch eine stoffschlüssige Verbindung zwischen Gehäuse und dem Versteifungselement wirkt sich positiv auf den Wärmeübergang aus. Bei der Wahl des Verbindungsmittels ist folglich zu beachten, dass sich die Art der Verbindung zwischen Gehäuse und Versteifungselement sowohl positiv auf den Wärmeübergang als auch positiv auf die mechanische Wechselwirkung zwischen Versteifungselement und Gehäuse auswirkt.

Ein besonders stabiles Versteifungselement liegt vor, wenn das Versteifungselement als geschweißte Hohlrahmenkonstruktion ausgebildet ist, vorzugsweise aus im Wesentlichen geraden Einzelteilen zusammengeschweißt ist und

Insbesondere bei einem Coriolis-Massedurchflussmessgerät mit gebogenen Messrohren hat sich als besonders vorteilhaft herausgestellt, wenn sich das Versteifungselement und das Messrohr an wenigstens einer Stelle im Gehäuse im Wesentlichen orthogonal kreuzen. Diese Ausgestaltung hat den Vorteil, dass zum einen eine Wärmeübertragung von dem Versteifungselement auf die Messrohre - durch Konvektion und Strahlung - erfolgen kann, wobei gleichzeitig eine vorteilhafte Stabilisierung des Gehäuses erfolgt. Die Streben des Versteifungselements sind dabei sowohl senkrecht als auch parallel innerhalb der Schwingungsebene der Messrohre vorgesehen.

Um die Wärmeübertragung zwischen Versteifungselement und den Messrohren zu optimieren, beispielsweise für Anwendungen bei denen das in den Messrohren geführte Medium geheizt werden muss damit es nicht erstarrt, ist vorgesehen, dass sich wenigstens ein Abschnitt des Versteifungselements im Wesentlichen parallel zu dem Messrohr erstreckt, so dass ein intensiver Wärmeübergang zwischen dem Versteifungselement und dem Messrohr erfolgt. Vorzugsweise ist aber beispielsweise auch das Versteifungselement in einem sehr großen Abschnitt parallel zu dem Messrohr geführt, so dass in einem großen Flächenbereich ein Wärmeübergang durch Konvektion und Strahlung zwischen dem Versteifungselement und dem Messrohr erfolgen kann. Dabei ist das Versteifungselement beispielsweise so ausgestaltet, dass einzelne Elemente des Versteifungselements im Wesentlichen der mechanischen Versteifung des Gehäuses dienen und andere Elemente des Versteifungselements lediglich dafür vorgesehen sind, den Wärmeübergang zwischen Versteifungselement und Messrohr bzw. dem Gehäuse zu optimieren, also ein Medium führen.

Der Wänneübergang zwischen dem Versteifungselement und dem Gehäuse bzw. dem Messrohr wird optimiert, indem das Versteifungselement aus einem Material mit einer hohen Wärmeleitfähigkeit besteht, so dass der Wärmedurchgang durch das Versteifungselement möglichst verlustfrei erfolgt. Das Versteifungselement besteht dazu beispielsweise aus Edelstahl, Titan oder Tantal, wobei auch Kupfer oder Aluminium denkbar ist.

Für den Betrieb der zuvor beschriebenen Coriolis-Massedurchflussmessgeräte eignet sich insbesondere ein Verfahren, nach dem ein auf eine vorgegebene Temperatur temperiertes Medium innerhalb des Volumens des Versteifungselements geführt wird. Insbesondere für Anwendungen, bei denen das Medium innerhalb der Messrohre eine definierte Temperatur hat, eignet sich dieses Verfahren entweder dazu, das Medium auf dieser Temperatur zu halten, es zu erwärmen oder es abzukühlen. Dazu wird in entsprechender Abstimmung mit den Vorgaben für die Temperatur des Messmediums die Temperatur des in das Volumen des Versteifungselements einzuleitenden Mediums vorgegeben. Insbesondere sind beispielsweise Anwendungen mit einem Heizmedium denkbar, bei denen das in den Messrohren geführte Medium nicht abkühlen darf, da es ansonsten erstarrt. Alternativ sind kryogene Anwendungen denkbar, insbesondere in der Lebensmittelindustrie, bei denen das zu messende Medium auf einer sehr niedrigen Temperatur gehalten oder auf eine sehr niedrige Temperatur abgekühlt werden muss.

Im Einzelnen gibt es eine Vielzahl von Möglichkeiten, das erfindungsgemäße Coriolis-Massedurchflussmessgerät auszugestalten und weiterzubilden. Dazu wird verwiesen auf die dem Patentanspruch 1 nachgeordneten Patentansprüche und auf die nachfolgende Beschreibung von Ausführungsbeispielen in Verbindung mit der Zeichnung. In der Zeichnung zeigen:
- Fig. 1: ein Ausführungsbeispiel eines Coriolis-Massedurchflussmessgeräts in teilweise geschnittener Seitenansicht,
- Fig. 2: ein weiteres Ausführungsbeispiel eines Coriolis-Massedurchflussmessgeräts in teilweise geschnittener Seitenansicht,
- Fig.3: das Ausführungsbeispiel eines Coriolis-Massedurchflussmessgeräts gemäß Fig. 1 in geschnittener Frontansicht und
- Fig. 4: verschiedene Ausgestaltungen von Versteifungselementen für ein Coriolis-Massedurchflussmessgerät.

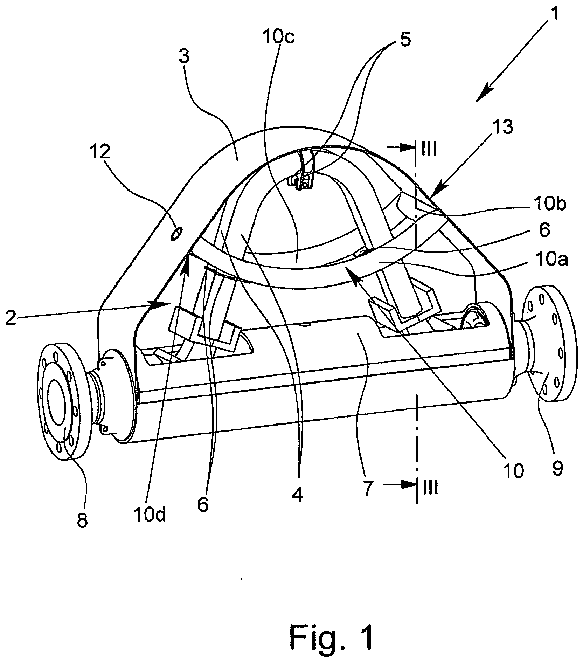

Fig. 1 zeigt ein Coriolis-Massedurchflussmessgerät 1 mit einer Sensoranordnung 2 und einem Gehäuse 3, wobei die vordere Seitenwand des Gehäuses 3 bei der Darstellung in Fig. 1 weggeschnitten ist. Die Sensoranordnung 2 umfasst zwei Messrohre 4, einen Schwingungserzeuger 5 und zwei Schwingungsaufnehmer 6, wobei der Schwingungserzeuger 5 und der Schwingungsaufnehmer 6 jeweils aus zwei wechselwirkenden Elementen bestehen und jeweils ein Element des Schwingungsaufnehmers 6 bzw. des Schwingungserzeugers 5 jeweils gegenüberliegend an einem der Messrohre 4 befestigt ist. Das Gehäuse 3 ist an einer Tragbrücke 7 befestigt, wobei sich die Tragbrücke 7 zwischen dem Eingangsflansch 8 und dem Ausgangsflansch 9 des Coriolis-Massedurchflussmessgeräts 1 erstreckt. Auch der Eingangsflansch 8 und der Ausgangsflansch 9 selbst sind an der Tragbrücke 7 befestigt. Der Übergang zwischen Eingangsflansch 8 und den Messrohren 4 erfolgt am - in Fig. 1 links dargestellten - Ende der Tragbrücke 7, wobei die Messrohre 4 bei diesem Ausführungsbeispiel als gebogene Messrohre ausgestaltet sind und nach oben aus der Tragbrücke 7 heraustreten, den im Wesentlichen U- oder V-förmigen Verlauf vollziehen und am - in Fig. 1 rechts dargestellten - Ende wieder in die Tragbrücke 7 hineintreten, wo die Messrohre 4 mit dem Ausgangsflansch 9 des Coriolis-Massedurchflussmessgeräts 1 verbunden sind.

Innerhalb des Gehäuses 3 - die Messrohre umschließend - ist ein Versteifungselement 10 in dem Gehäuse 3 vorgesehen, das an sämtlichen Wänden des Gehäuses 3 flächig anliegt und mit den Wänden des Gehäuses 3 verschweißt ist. Das Versteifungselement 10 ist als geschweißte Hohlrahmenkonstruktion ausgestaltet und weist im Profil einen rechteckigen Querschnitt auf, so dass das Verstärkungselement 10 einen besonders flächigen Kontakt mit den Wänden des Gehäuses 3 hat. Das Versteifungselement 10 weist in Bezug auf seine Längsseiten eine im Wesentlichen bogenförmige Grundform auf, wobei das Versteifungselement 10 derart im Gehäuse 3 des Coriolis-Massedurchflussmessgeräts 1 befestigt ist, dass sich der Bogenverlauf des Versteifungselements 10 entgegengesetzt zum Bogenverlauf der Messrohre 4 erstreckt. Durch diese Positionierung des Versteifungselements 10 innerhalb des Gehäuses 3 wird eine sehr vorteilhafte Verschiebung der Eigenfrequenz des Gehäuses in einen Bereich weg von der Arbeitsfrequenz der Messrohre erreicht.

Das Versteifungselement 10 ist aus hohlen Einzelteilen 10a, 10b, 10c und 10d hergestellt, so dass sich innerhalb des hohlen Versteifungselements 10 ein geschlossenes Volumen 11 ausbildet, in dem ein Medium führbar ist. Das Volumen 11 ist von außerhalb des Gehäuses 3 im Montagezustand durch eine Eingangsöffnung 12 bzw. durch eine Ausgangsöffnung 13 zugänglich. Die Ausgangsöffnung 13 bzw. die Eingangsöffnung 12 durchtreten die Wand des Gehäuses, so dass ein Medium zu Heiz- oder Kühlzwecken zuführbar bzw. abführbar ist.

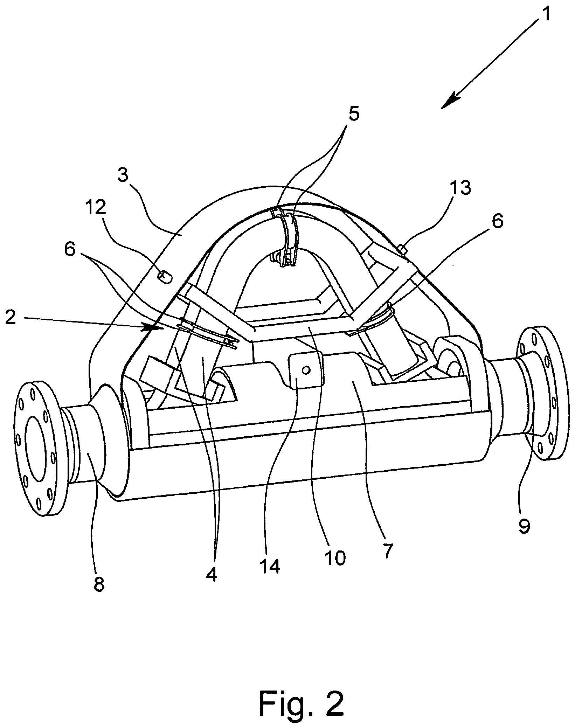

Fig. 2 zeigt eine weitere Ausgestaltung eines Coriolis-Massedurchflussmessgeräts 1, wobei sich die Ausgestaltung gemäß Fig. 2 im Wesentlichen dadurch von der Ausgestaltung nach Fig. 1 unterscheidet, dass neben einem ersten Versteifungselement 10 , das im Wesentlichen eine bogenförmige Grundform aufweist und aus einer Mehrzahl von geraden Einzelteilen als geschweißte Hohlrahmenkonstruktion hergestellt ist, ein zweites Versteifungselement 14 vorgesehen ist, das an der Tragbrücke 7 befestigt ist und sich zwischen den beiden flachen Seitenwänden des Gehäuses 3 im Wesentlichen orthogonal zur Tragbrücke 7 erstreckt. Das zweite Versteifungselement 14 verbindet die gegenüberliegenden Seitenwände miteinander, stabilisiert dadurch das Gehäuse und verändert die Eigenfrequenzen des Gehäuses durch diese innere mechanische Kopplung.

Die Versteifungselemente 10, 14 sind unabhängig voneinander nebeneinander im Gehäuse 3 positioniert, dienen aber beide der Versteifung des Gehäuses 3 und der Verschiebung der Eigenfrequenz des Gehäuses weg von der Arbeitsfrequenz der Messrohre 4. Bei diesem Ausführungsbeispiel ist lediglich im ersten Versteifungselement 10 ein Medium führbar, das an der Eintrittsöffnung 12 in das erste Versteifungselement 10 einleitbar und an der Ausgangsöffnung 13 aus dem ersten Versteifungselement ausleitbar ist. Während das erste Versteifungselement 10 vollständig mit den Wänden - auch mit der nicht dargestellten vorderen Wand - des Gehäuses 3 verschweißt ist, wird das zweite Versteifungselement 14 lediglich mit den Seitenwänden des Gehäuses 3 verschraubt.

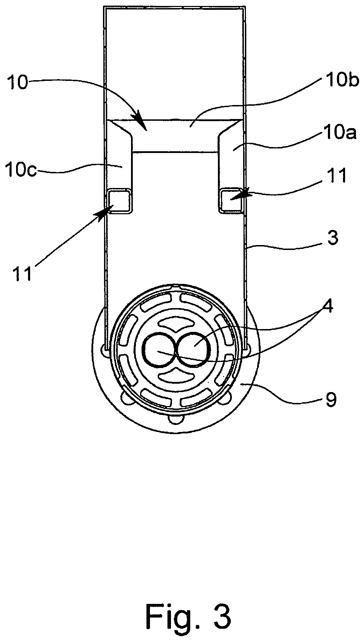

Fig. 3 zeigt das Ausführungsbeispiel gemäß Fig. 1 in einer teilweise geschnittenen Frontansicht, wobei die Messrohre 4 lediglich im Bereich der Tragbrücke 7 dargestellt sind. Das Versteifungselement 10 mit seinem rechteckigen Querschnitt liegt flächig an sämtlichen Wänden des Gehäuses 3 an und ist mit den Wänden des Gehäuses 3 verschweißt, so dass ein optimaler Wärmeübergang zwischen dem in dem Volumen 11 des Versteifungselements 10 geführten Medium und den Wänden des Gehäuses 3 erfolgen kann. Zwischen den beiden seitlich angeordneten Einzelteilen 10c und 10a des Versteifungselements 10 verlaufen im Montagezustand üblicherweise die bogenförmig verlaufenden Messrohre 4.

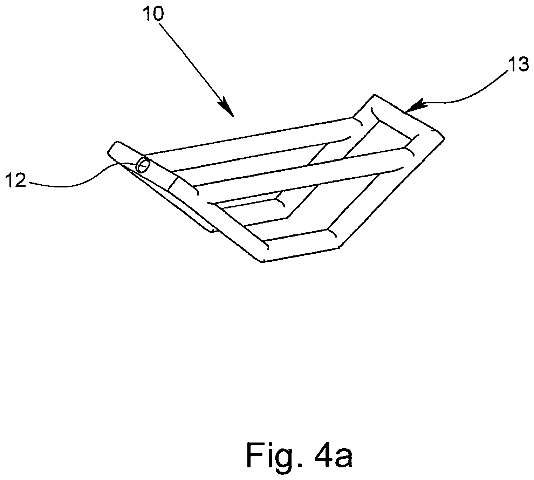

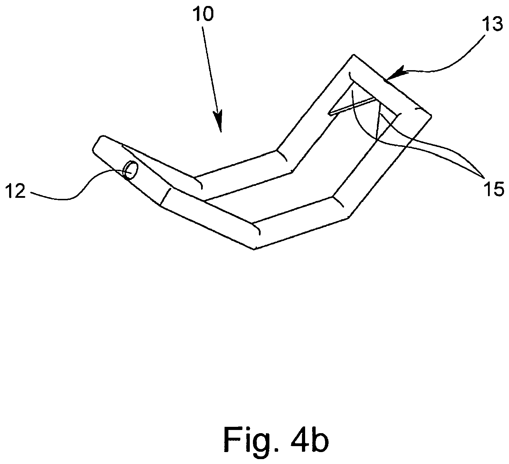

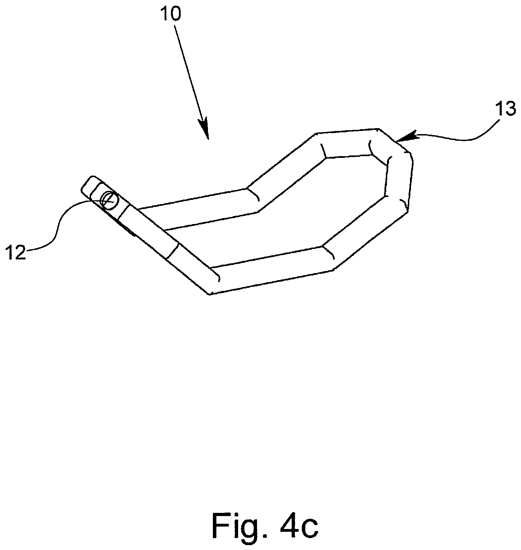

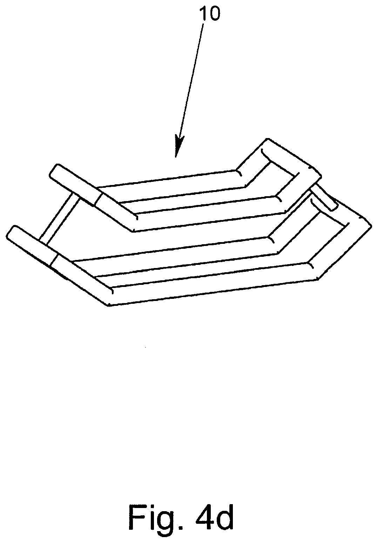

Fig. 4a bis 4e zeigen verschiedene Ausführungsbeispiele von Verstärkungselementen 10. Die in den Fig. 4a bis 4e dargestellten Versteifungselemente 10 haben gemeinsam, dass sie alle eine - im Bezug auf ihre Längsseite - im Wesentlichen bogenförmige Grundform aufweisen und als geschweißte Hohlrahmenkonstruktion ausgestaltet sind. Zur Stabilisierung der Versteifungselemente 10 an sich sind beispielsweise in der Fig. 4b dargestellte Versteifungsmittel 15 vorgesehen, die im Stoßbereich zweier Einzelteile des Versteifungselements 10 angeordnet und mit den Einzelteilen des Versteifungselements 10 verschweißt sind, so dass sich eine stützende Wirkung durch die flächigen Versteifungsmittel 15 in den Winkelbereichen ergibt.

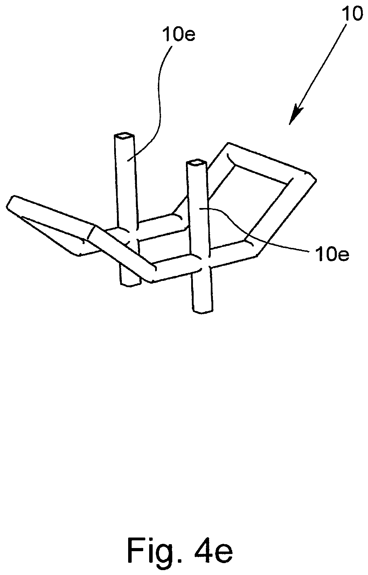

Das in Fig. 4e dargestellte Ausführungsbeispiel weist neben den sich bei den anderen Ausführungsbeispielen üblicherweise horizontal und schräg erstreckenden Einzelteilen des Versteifungselements 10 zusätzlich auf jeder Längsseite vertikale Einzelteile 10e auf, die einer Kraftübertragung in vertikaler Richtung und einer Stabilisierung des Versteifungselements 10 dienen.

Sämtliche in den Fig. 4a bis 4e dargestellten Ausführungsbeispiele für Versteifungselemente 10 sind zur Verwendung in einem Coriolis-Massedurchflussmessgerät 1 gemäß den Fig. 1 und 2 vorgesehen.

## Patentansprüche

1. Coriolis-Massedurchflussmessgerät (1) mit wenigstens einer Sensoranordnung (2) und wenigstens einem Gehäuse (3), wobei die Sensoranordnung (2) wenigstens ein Messrohr (4), wenigstens einen Schwingungserzeuger (5) und wenigstens einen Schwingungsaufnehmer (6) umfasst, und wobei das Messrohr (4) durch den Schwingungserzeuger (5) in wenigstens einer Arbeitsfrequenz anregbar ist, wobei innerhalb des Gehäuses (3) zusätzlich wenigstens ein Versteifungselement (10) angeordnet ist und das Versteifungselement (10) derart mit dem Gehäuse (3) verbunden ist, dass die realisierten Eigenfrequenzen des Gehäuses (3) weg von der Arbeitsfrequenz des Messrohrs (4) verschoben sind, **dadurch gekennzeichnet,**
**dass** das Versteifungselement (10) aus wenigstens einem Hohlkörper besteht, so dass innerhalb des Versteifungselements (10) ein geschlossenes Volumen (11) definiert wird und innerhalb des Versteifungselements (10) ein Medium zum Einstellen der Temperatur des Coriolis-Massedurchflussmessgeräts (1) und/oder der Temperatur des Messmediums innerhalb der Messrohre (4) führbar ist.

2. Coriolis-Massedurchflussmessgerät (1) nach Anspruch 1, **dadurch gekennzeichnet, dass** das Messrohr (4) gebogen ist, insbesondere im Wesentlichen U- oder V-förmig gebogen ist.

3. Coriolis-Massedurchflussmessgerät (1) nach Anspruch 2, **dadurch gekennzeichnet, dass** das Versteifungselement (10) eine bogenförmige Grundform aufweist, wobei das Versteifungselement (10) insbesondere derart im Gehäuse (3) angeordnet ist, dass der Bogenverlauf des Messrohrs (4) entgegengesetzt zum Bogenverlauf des Versteifungselements (10) angeordnet ist.

4. Coriolis-Massedurchflussmessgerät (1) nach einem der Ansprüche 1 bis 3, **dadurch gekennzeichnet, dass** das Versteifungselement (10) an mindestens einer Wand des Gehäuses (3) befestigt ist, insbesondere flächig anliegend befestigt ist, bevorzugt stoffschlüssig verbunden ist.

5. Coriolis-Massedurchflussmessgerät (1) nach einem der Ansprüche 1 bis 4, **dadurch gekennzeichnet, dass** das Volumen (11) des Versteifungselements (10) wenigstens eine Eingangsöffnung (12) und wenigstens eine Ausgangsöffnung (13) aufweist, so dass ein Medium in das Volumen (11) einleitbar bzw. aus dem Volumen (11) ausleitbar ist.

6. Coriolis-Massedurchflussmessgerät (1) nach einem der Ansprüche 1 bis 5, **dadurch gekennzeichnet, dass** das Versteifungselement (10) als geschweißte Hohlrahmenkonstruktion ausgebildet ist, vorzugsweise aus im Wesentlichen geraden Einzelteilen (10a, 10b, 10c, 10d) zusammengeschweißt ist und insbesondere vertikale und/oder horizontale Verstrebungen aufweist.

7. Coriolis-Massedurchilussmessgerät (1) nach einem der Ansprüche 1 bis 6, **dadurch gekennzeichnet, dass** das Versteifungselement (10) in mindestens einem Eckbereich das Versteifungselement (10) versteifende flächige Versteifungsmittel (15) aufweist.

8. Coriolis-Massedurchflussmessgerät (1) nach einem der Ansprüche 1 bis 7, **dadurch gekennzeichnet, dass** sich das Versteifungselement (10) und das Messrohr (4) an wenigstens einer Stelle im Gehäuse (3) im Wesentlichen orthogonal kreuzen.

9. Coriolis-Massedurchflussmessgerät (1) nach einem der Ansprüche 1 bis 8, **dadurch gekennzeichnet, dass** sich wenigstens ein Abschnitt des Versteifungselements (10) im Wesentlichen parallel zu dem Messrohr (4) erstreckt, so dass ein intensiver Wärmeübergang zwischen dem Versteifungselement (10) und dem Messrohr (4) erfolgt.

10. Coriolis-Massedurchflussmessgerät (1) nach einem der Ansprüche 1 bis 9, **dadurch gekennzeichnet, dass** das Versteifungselement (10) aus einem Material mit einer hohen Wärmeleitfähigkeit besteht, so dass Wärmeenergie möglichst verlustfrei durch die Wand des Versteifungselements (10) übertragbar ist.

11. Verfahren zum Betrieb eines Coriolis-Massedurchflussmessgeräts (1) nach einem der Ansprüche 1 bis 10, **dadurch gekennzeichnet, dass** innerhalb des Volumens (11) des Versteifungselements (10) ein auf eine vorgegebene Temperatur temperiertes Medium geführt wird, insbesondere ein Heizmedium oder ein Kühlmedium, so dass die Temperatur des Coriolis-Massedurchflussmessgeräts (1) (1) und/oder die Temperatur des Messmediums innerhalb der Messrohre (4) eingestellt wird.

## Claims

1. Coriolis mass flowmeter (1) with at least one sensor arrangement (2) and at least one housing (3), wherein the sensor arrangement (2) includes at least one measuring tube (4), at least one oscillation generator (5) and at least one oscillation sensor (6), and wherein the measuring tube (4) can be excited by the oscillation generator (5) in at least one operating frequency, wherein, additionally, at least one reinforcement element (10) is arranged in the housing (3) and the reinforcement element (10) is joined to the housing (3) in such a manner that the implemented eigenfrequencies of the housing (3) are shifted away from the operating frequency of the measuring tube (4),
**characterized in**
**that** the reinforcement element (10) consists of at least one hollow body, so that a closed volume (11) is defined within the reinforcement element (10) and a medium can be conveyed within the reinforcement element (10) for setting the temperature of the measuring medium within the measuring tube (4).

2. Coriolis mass flowmeter (1) according to claim 1, **characterized in that** the measuring tube (4) is bent, in particular is essentially bent into a U- or V-shape.

3. Coriolis mass flowmeter (1) according to claim 2, **characterized in that** the reinforcement element (10) has a basic shape that is arched, wherein the reinforcement element (10) is arranged, in particular, in such a manner in the housing (3) that the curve of the arc of the measuring tube (4) is opposed to the curve of the arc of the reinforcement element (10).

4. Coriolis mass flowmeter (1) according to any one of claims 1 to 3, **characterized in that** the reinforcement element (10) is affixed to at least one wall of the housing (3), in particular is affixed with surface contact, preferably is adhesively joined.

5. Coriolis mass flowmeter (1) according to any one of claims 1 to 4, **characterized in that** the volume (11) of the reinforcement element (10) has at least one input opening (12) and at least one output opening (13) so that a medium can be conveyed into the volume (11) or conveyed out of the volume (11).

6. Coriolis mass flowmeter (1) according to any one of claims 1 to 5, **characterized in that** the reinforcement element (10) is formed as a welded hollow frame structure, preferably is welded together out of essentially straight single parts (10a, 10b, 10c, 10c) and, in particular, has vertical and/or horizontal cross beams.

7. Coriolis mass flowmeter (1) according to any one of claims 1 to 6, **characterized in that** the reinforcement element (10) has flat reinforcement means (15) reinforcing the reinforcement element (10) in at least one corner region.

8. Coriolis mass flowmeter (1) according to any one of claims 1 to 7, **characterized in that** the reinforcement element (10) and the measuring tube (4) cross each other essentially orthogonally at at least one point in the housing (4).

9. Coriolis mass flowmeter (1) according to any one of claims 1 to 8, **characterized in that** at least one section of the reinforcement element (10) extends essentially parallel to the measuring tube (4), so that an intensive heat transfer occurs between the reinforcement element (10) and the measuring tube (4).

10. Coriolis mass flowmeter (1) according to any one of claims 1 to 9, **characterized in that** the reinforcement element (10) consists of a material having a high thermal conductivity, so that thermal energy is transferred through the wall of the reinforcement element (10) with as little loss as possible.

11. Method for operating a Coriolis mass flowmeter (1) according to any one of claims 1 to 10, **characterized in that** a medium brought to a predefined temperature, in particular a heated medium or a cooled medium is conveyed within the volume (11) of the reinforcement element (10) so that the temperature of the Coriolis mass flowmeter (1) and/or the temperature of the measuring medium within the measuring tube (4) is adjusted.

## Revendications

1. Débitmètre Coriolis (1) comportant au moins un dispositif de détection (2) et au moins un boîtier (3), le dispositif de détection (2) comportant au moins un tube de mesure (4), au moins un générateur de vibrations (5) et au moins un absorbeur de vibrations (6) et le tube de mesure (4) pouvant être excité par le générateur de vibrations (5) dans au moins une fréquence opératoire (3), sachant que, à l'intérieur du boîtier (10), au moins un élément raidisseur est en outre disposé et que l'élément raidisseur (10) est connecté au boîtier (3) de manière à ce que les fréquences propres réalisées du boîtier (3) soient éloignées de la fréquence opératoire du tube de mesure (4),
**caractérisé en ce que**
l'élément raidisseur (10) est composé d'au moins un corps creux de sorte que, à l'intérieur de l'élément raidisseur (10), un volume fermé (11) est défini et que, à l'intérieur de l'élément raidisseur (10), un fluide permettant de régler la température du débitmètre Coriolis (1) et/ou la température du fluide de mesure peut être guidé à l'intérieur des tubes de mesure (4).

2. Débitmètre Coriolis (1) selon la revendication 1, **caractérisé en ce que** le tube de mesure (4) est courbé, en particulier courbé sensiblement en forme de U ou en forme de V.

3. Débitmètre Coriolis (1) selon la revendication 2, **caractérisé en ce que** l'élément raidisseur (10) présente une forme de base arquée, l'élément raidisseur (10) étant en particulier disposé dans le boîtier (3) de manière à ce que l'extension arquée du tube de mesure (4) soit disposée en sens inverse de l'extension arquée de l'élément raidisseur (10).

4. Débitmètre Coriolis (1) selon une des revendications 1 à 3, **caractérisé en ce que** l'élément raidisseur (10) est fixé à au moins une paroi du boîtier (3), en particulier en contact superficiel, de préférence en correspondance de matière.

5. Débitmètre Coriolis (1) selon une des revendications 1 à 4, **caractérisé en ce que** le volume (11) de l'élément raidisseur (10) présente au moins un orifice d'entrée (12) et au moins un orifice de sortie (13), de sorte qu'un fluide (11) peut être introduit dans le ou extrait du volume (11).

6. Débitmètre Coriolis (1) selon une des revendications 1 à 5, **caractérisé en ce que** l'élément raidisseur (10) est réalisé sous forme d'une structure soudée en cadre creux, de préférence assemblée par soudage à partir de pièces individuelles sensiblement droites (10a, 10b, 10c, 10d) et présente en particulier des entretoises verticales et/ou horizontales.

7. Débitmètre Coriolis (1) selon une des revendications 1 à 6, **caractérisé en ce que** l'élément raidisseur (10) présente, dans au moins une zone d'angle, des moyens raidisseurs superficiels (15) renforçant l'élément raidisseur (10).

8. Débitmètre Coriolis (1) selon une des revendications 1 à 7, **caractérisé en ce que** l'élément raidisseur (10) et le tube de mesure (4) se croisent sensiblement orthogonalement à au moins un endroit dans le boîtier (3).

9. Débitmètre Coriolis (1) selon une des revendications 1 à 8, **caractérisé en ce qu'**au moins une section de l'élément raidisseur (10) s'étend sensiblement parallèlement au tube de mesure (4), de sorte qu'un transfert thermique intensif a lieu entre l'élément raidisseur (10) et le tube de mesure (4).

10. Débitmètre Coriolis (1) selon une des revendications 1 à 9, **caractérisé en ce que** l'élément raidisseur (10) est composé d'un matériau à forte conductivité thermique, de sorte que de l'énergie thermique est transférable autant que possible sans perte à travers la paroi de l'élément raidisseur (10).

11. Procédés d'utilisation d'un débitmètre Coriolis (1) selon une des revendications 1 à 10, **caractérisé en ce que**, à l'intérieur du volume (11) de l'élément raidisseur, est guidé un fluide tempéré à une température prédéfinie, en particulier un fluide chauffant ou un fluide réfrigérant (10), de sorte que la température du débitmètre Coriolis (1) (1) et/ou la température du fluide de mesure est réglée à l'intérieur des tubes de mesure (4).
